Europäisches Patentamt

European Patent Office

Office européen des brevets

(19)

(11) Veröffentlichungsnummer : **0 104 592**
**B1**

(12) **EUROPÄISCHE PATENTSCHRIFT**

(45) Veröffentlichungstag der Patentschrift :
04.05.88

(51) Int. Cl.⁴ : **G 01 H 9/00**

(21) Anmeldenummer : **83109340.6**

(22) Anmeldetag : **20.09.83**

(54) **Vorrichtung und Verfahren zum Nachweis von Oberflächenwellen.**

(30) Priorität : **27.09.82 DE 3235699**

(43) Veröffentlichungstag der Anmeldung :
**04.04.84 Patentblatt 84/14**

(45) Bekanntmachung des Hinweises auf die Patenterteilung : **04.05.88 Patentblatt 88/18**

(84) Benannte Vertragsstaaten :
**DE GB NL**

(56) Entgegenhaltungen :
ELECTRONICS INTERNATIONAL, Band 56, Nr. 10, Mai 1983, Seiten 132-136, New York, USA; H.-P. FEUERBAUM et al.: "Scanned electron-beam probe shows surface acoustic waves in action"
INSTRUMENTS AND EXPERIMENTAL TECHNIQUES, Band 24, Nr. 4, Teil 2, Juli/August 1981, Seiten 1049-1050, New York, USA; R.YU. VALATKA et al.: "Application of a scanning electron microscope for the investigation of surface-acoustic-wave propagation"
ELECTRONICS INTERNATIONAL, Band 53, Nr. 19, August 1980, Seiten 73-74, New York; USA; J. GOSCH: " E beam makes surface acoustic waves visible"

(73) Patentinhaber : **Siemens Aktiengesellschaft Berlin und München**
**Wittelsbacherplatz 2**
**D-8000 München 2 (DE)**

(72) Erfinder : **Feuerbaum, Hans-Peter, Dr. Dipl.-Phys.**
**Arno-Assmann-Strasse 14**
**D-8000 München 83 (DE)**

**Beschreibung**

Die Erfindung betrifft eine Vorrichtung zur Sichtbarmachung von Oberflächenwellen nach dem Oberbegriff des Anspruchs 1 und ein entsprechendes Verfahren nach dem Oberbegriff des Anspruchs 2.

Laufende Oberflächenwellen sollen mit einem Korpuskularstrahl sichtbar gemacht werden.

Es ist bekannt, laufende Oberflächenwellen mit Hilfe eines Elektronenstrahl-Meßgeräts nach der Methode des Potentialkontrasts nach dem Sampling-Prinzip sichtbar zu machen (H. P. Feuerbaum et al., Scanning Electron Microscopy/1980/I, 503-508). Bei dieser bekannten Methode zur Sichtbarmachung von laufenden Oberflächenwellen wird ein Elektronenstrahl mit Hilfe eines Strahlaustastsystems synchron mit der Frequenz der laufenden Oberflächenwellen gepulst. Bilder von laufenden Oberflächenwellen, die mit einem solchen bekannten Verfahren gewonnen worden sind, zeigen die Ausbreitung dieser Oberflächenwellen zu einer bestimmten Phase des periodischen Vorgangs.

Stroboskopische Abbildungsverfahren zur Sichtbarmachung laufender Oberflächenwellen in einem Raster-Elektronenmikroskop sind aus Instruments and Experimental Techniques, Bd. 24 Nr. 4, Teil 2, Juli/August 1981, Seiten 1049-1050 und Electronics International, Bd. 53, Nr. 19, August 1980, Seiten 73-74 bekannt.

Der Erfindung liegt die Aufgabe zugrunde, eine Vorrichtung und ein Verfahren der eingangs genannten Art anzugeben, die gegenüber den bekannten Sampling-Verfahren eine um Größenordnungen bessere Nachweisempfindlichkeit aufweisen.

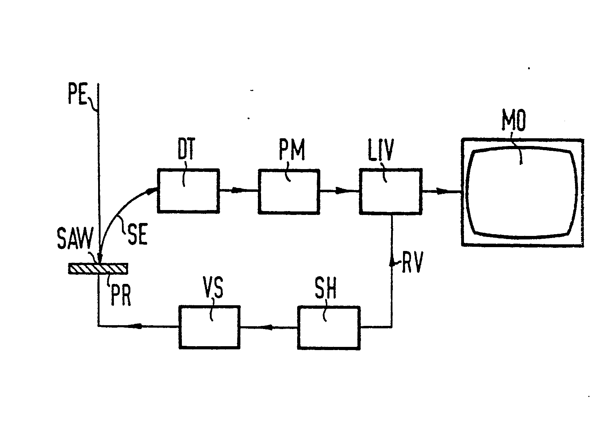

Diese Aufgabe wird erfindungsgemäß durch eine Vorrichtung nach dem Anspruch 1 und durch ein Verfahren nach dem Anspruch 2 gelöst. Ausgestaltungen und Vorteile der Erfindung sind in der Beschreibung und der Zeichnung dargestellt.

Die Figur zeigt schematisch eine erfindungsgemäße Vorrichtung zur Sichtbarmachung von Oberflächenwellen.

Eine erfindungsgemäße Vorrichtung für eine erfindungsgemäße Sichtbarmachung von Oberflächenwellen SAW ist in der Figur dargestellt. Ein Frequenzsynthetisator SH erzeugt eine beliebig wählbare Schwingung, mit der sowohl die Probe PR zur Bildung von laufenden Oberflächenwellen SAW angeregt wird als auch der lock-in-Verstärker LIV angesteuert wird. Ein Frequenzsynthetisator SH ist eine Schaltungsanordnung zur Erzeugung von nahezu oberwellenfreien Schwingungen mit sehr hoher Frequenzkonstanz. Ein Frequenzsynthetisator SH leitet die synthetisierten Frequenzen durch Vervielfachung oder durch Teilung von der Frequenz eines Normalfrequenzgenerators ab. Ein Frequenzsynthetisator SH dient z.B. für Meßzwecke oder zur Ansteuerung von Sendern, deren Frequenz häufig gewechselt werden muß.

Die vom Frequenzsynthetisator SH zur Probe PR übermittelte Schwingung wird zwischendurch noch durch einen Verstärker VS verstärkt. Die vom Frequenzsynthetisator SH erzeugte Schwingung wird zum lock-in-Verstärker LIV über den Eingang RV am lock-in-Verstärker LIV für die Referenzspannung übermittelt. Oberflächenwellen SAW können auf der Probe PR beispielsweise durch Fingerwandler hervorgerufen werden, die mit einer bestimmten Frequenz vom Frequenzsynthetisator SH angesteuert werden.

Der ständig eingeschaltete, aus einem Primär-Elektronenstrahl PE bestehende Korpuskularstrahl rastert einen Teil der Oberfläche der Probe PR ab und löst dabei auf der Probe PR Sekundärelektronen SE aus. Die Zahl der am Detektor DT nachgewiesenen Sekundärelektronen SE variiert dabei nach der Methode des Potentialkontrasts mit dem Potential am jeweiligen Meßpunkt, auf den gerade der Primär-Elektronenstrahl PE gerichtet ist. Die Sekundärelektronen SE lösen im Detektor DT über einen Szintillator ein Sekundärelektronen-Signal aus. Dieses Sekundärelektronen-Signal wird in einem Fotomultiplier PM weiterbehandelt und dann verstärkt. Nach Verstärkung des Sekundärelektronen-Signals in der schnellen Szintillator-Fotomultiplier-Kombination nach der Figur werden die durch Oberflächenwellen SAW verursachten Signalschwankungen im Sekundärelektronen-Signal mit dem lock-in-Verstärker LIV nachgewiesen. Ein solches erfindungsgemäßes Verfahren erlaubt gegenüber dem aus der obengenannten Literaturstelle bekannten Sampling-Verfahren eine Verbesserung der Nachweisempfindlichkeit von Signalschwankungen im Sekundärelektronen-Signal um Größenordnungen. Das im lock-in-Verstärker LIV nachgewiesene Meßsignal kann beispielsweise auf einem Monitor MO in Abhängigkeit von der Position des Primär-Elektronenstrahls PE auf der Probe PR sichtbar gemacht werden. Beim Abrastern eines Teiles der Oberfläche der Probe PR erhält man dann auf dem Schirm des Monitors MO ein Potentialkontrastbild der Signalschwankungen im Sekundärelektronen-Signal, die durch Oberflächenwellen SAW hervorgerufen worden sind. Über ein solches Potentialkontrastbild auf dem Monitor MO können dann die jeweiligen Oberflächenwellen SAW sichtbar gemacht werden.

Als lock-in-Verstärker kann beispielsweise ein Ithaco Dynatrac model 391A verwendet werden. Der lock-in-Verstärker LIV läßt nur solche Teile des Meßsignals auf dem Schirm des Monitors MO sichtbar werden, die dieselbe Frequenz aufweisen wie die auf einer geeigneten, beispielsweise piezoelektrischen, Oberfläche der Probe PR angeregten Oberflächenwellen SAW, weil genau dieselbe Schwingung, mit der die Oberflächenwellen SAW auf der Probe PR angeregt werden, auch am Referenzspannungs-Eingang RV des lock-in-Verstärkers LIV angelegt wird. Ein erfindungsgemäßes Verfahren benötigt beispielsweise im Gegensatz zum genannten Stand der Technik kein gepulstes Strahlaustastsystem. Der lock-in-Verstärker LIV läßt auf dem Monitor MO die Amplitude desjenigen Signalanteils im Sekundärelektronen-Signal sichtbar werden, der genau dieselbe Frequenz wie die Oberflächenwellen SAW aufweist. Auf dem Monitor MO wird also im Gegensatz zum genannten Stand der Technik nicht eine Phase von periodischen Vorgängen sichtbar, sondern es wird diejenige Amplitude als Funktion der abgerasterten Meßpunkte auf der Oberfläche der Probe PR sichtbar gemacht, die zu dem Signalanteil des Sekundärelektronen-Signals gehört, der genau dieselbe Frequenz wie die Oberflächenwellen SAW besitzt. Schwankungen innerhalb dieser Amplitude in Abhängigkeit von den abgerasterten Meßpunkten auf der Oberfläche der Probe PR können mit einem erfindungsgemäßen Verfahren mit einer sehr hohen Nachweisempfindlichkeit ermittelt werden.

Der Primär-Elektronenstrahl PE kann beispielsweise mit 2,5 kV beschleunigt werden. Bei dieser Beschleunigungsspannung werden isolierende Kristalle, bei denen Oberflächenwellen SAW angeregt werden können, nicht aufgeladen. Der Primär-Elektronenstrahl PE kann einen Durchmesser von 1,2 μm aufweisen, womit ein Strahlstrom von $10^{-7}$ A erreicht wird.

## Patentansprüche

1. Vorrichtung zur Sichtbarmachung von Oberflächenwellen (SAW) auf einer Probe (PR) mit einem Korpuskularstrahl (PE), einem Detektor (DT) zum Nachweis der vom Korpuskularstrahl (PE) auf der Probe (PR) ausgelösten Sekundärelektronen (SE), einem Sichtgerät (MO) zur Darstellung eines Sekundärelektronensignals in Abhängigkeit vom Ort des Korpuskularstrahls (PE) auf der Probe (PR) und einer Einrichtung zur Erzeugung von Oberflächenwellen (SAW) einer bestimmten Frequenz, dadurch gekennzeichnet, daß der Einrichtung zur Erzeugung der Oberflächenwellen (SAW) ein die bestimmte Frequenz definierender Frequenzgeber (SH) vorgeschaltet ist, daß dem Sichtgerät (MO) ein lock-in-Verstärker (LIV) vorgeschaltet ist, dessen Eingang mit dem Sekundärelektronensignal und dessen Referenzeingang (RV) mit einem die bestimmte Frequenz aufweisenden Ausgangssignal des Frequenzgebers (SH) beaufschlagt ist, daß das Ausgangssignal des lock-in-Verstärkers (LIV) an einem Eingang des Sichtgerätes (MO) anliegt und daß der Korpuskularstrahl (PE) ständig eingeschaltet ist.

2. Verfahren zur Sichtbarmachung von Oberflächenwellen (SAW), bei dem ein Korpuskularstrahl (PE) auf einer Probe (PR) positioniert und zumindest über einen Teilbereich der Probenoberfläche abgelenkt wird, bei dem die vom Korpuskularstrahl (PE) ausgelösten Sekundärelektronen (SE) in einem Detektor (DT) nachgewiesen werden und bei dem ein Sekundärelektronensignal in Abhängigkeit vom Ort des Korpuskularstrahls (PE) auf der Probe (PR) mit einem Sichtgerät (MO) dargestellt wird, dadurch gekennzeichnet, daß Oberfächenwellen (SAW) einer bestimmten Frequenz angeregt werden, daß ein ständig eingeschalteter Korpuskularstrahl (PE) zum Abtasten der Probenoberfläche verwendet wird und daß die Amplitude eines Signalanteils im Sekundärelektronensignal bestimmt wird, dessen Frequenz mit der Frequenz der Oberflächenwellen (SAW) übereinstimmt.

## Claims

1. A device for rendering visible surface waves (SAW) on a specimen (PR) by means of a corpuscular beam (PE), a detector (DT) which detects the secondary electrons (SE) triggered by the corpuscular beam (PE) on the specimen (PR), a visual display device (MO) which represents a secondary electron signal in dependence upon the location of the corpuscular beam (PE) on the specimen (PR), and a device for generating surface waves (SAW) of a specified frequency, characterised in that the device which generates the surface waves (SAW) is preceded by a frequency generator (SH) which defines the specified frequency, that the visual display device (MO) is preceded by a lock-in amplifier (LIV) whose input is supplied with the secondary electron signal and whose reference input (RV) is supplied with an output signal of the frequency generator (HS) which has the specified frequency, that the output signal of the lock-in amplifier (LIV) is connected to an input of the visual display device (MO) and that the corpuscular beam (PE) is continuously-connected.

2. A method of rendering visible surface waves (SAW), wherein a corpuscular beam (PE) is positioned on a specimen (PR) and is deflected at least over a sub-zone of the specimen surface, where the secondary electrons (SE) triggered by the corpuscular beam (PE) are detected in a detector (DT) and where a secondary electron signal is represented by a visual display device (MO) in dependence upon the location of the corpuscular beam (PE) on the specimen (PR), characterised in that surface waves (SAW) of a specified frequency are excited, that a continuously connected corpuscular beam (PE) is used to scan the surface of the specimen, and that the amplitude of a signal component in the secondary electron signal, whose frequency is identical to the frequency of the surface waves (SAW), is determined.

## Revendications

1. Dispositif pour visualiser des ondes de surface (SAW) sur un échantillon (PR) et comportant un faisceau corpusculaire (PE), un détecteur (DT) servant à détecter les électrons secondaires produits sous l'effet du faisceau corpusculaire (PE) tombant sur l'échantillon (PR), un appareil de visualisation (MO) servant à représenter un signal d'électrons secondaires en fonction de l'emplacement du faisceau corpusculaire (PE) sur l'échantillon (PR) et un dispositif pour produire des ondes de surface (SAW) possédant une fréquence déterminée, caractérisé en ce qu'un générateur de fréquence (SH) définissant une fréquence déterminée est branché en amont du dispositif servant à produire les ondes de surface (SAW), qu'en amont de l'appareil de visualisation (MO) se trouve branché un amplificateur de verrouillage (LIV), dont l'entrée est chargée par le signal d'électrons secondaires et dont l'entrée de référence (RV) est chargée par un signal de sortie, qui possède la fréquence déterminée, du générateur de fréquence (SH), que le signal de sortie de l'amplificateur de verrouillage (LIV) est raccordé à une entrée de l'appareil de visualisation (MO) et que le faisceau corpusculaire (PE) est appliqué en permanence.

2. Procédé pour visualiser les ondes de surface (SAW), selon lequel un faisceau corpusculaire (PE) est positionné sur un échantillon (PR) et est dévié au moins sur une zone partielle de la surface de l'échantillon, et selon lequel les électrons secondaires (SE) produits sous l'effet du faisceau corpusculaire (PE) sont détectés dans un détecteur (DT) et selon lequel un signal d'électrons secondaires est représenté au moyen d'un appareil de visualisation (MO) en fonction de l'emplacement du faisceau corpusculaire (PE) sur l'échantillon (PR), caractérisé par le fait qu'on déclenche l'apparition d'ondes de surface (SAW) d'une fréquence déterminée, qu'on utilise un faisceau corpusculaire (PE) appliqué en permanence, pour balayer la surface de l'échantillon et qu'on détermine l'amplitude d'une partie du signal d'électrons secondaires, dont la fréquence coïncide avec la fréquence des ondes de surface (SAW).